# EUROPEAN PATENT APPLICATION

(11) **EP 4 718 692 A1**
(43) Date of publication of application: **01.04.2026**
(21) Application number: 24856240.7
(22) Date of filing: 31.07.2024
(51) Int. Cl.: H02K 15/02

(54) **METHOD AND APPARATUS FOR PRODUCING DIVIDED CORE**

(30) Priority: 21.08.2023 JP 2023134179
(71) Applicant: Yoshikawa Kogyo Co., Ltd., Kitakyushu-shi, Fukuoka 805-8501 (JP)
(72) Inventor: IMAHASHI, Kaito, Kitakyushu-shi, Fukuoka 805-8501 (JP); HATTORI, Yasunori, Kitakyushu-shi, Fukuoka 805-8501 (JP); FURUNO, Fumiyasu, Kitakyushu-shi, Fukuoka 805-8501 (JP); OKAMURA, Yuza, Kitakyushu-shi, Fukuoka 805-8501 (JP)
(74) Representative: Goddar, Heinz J.
(86) International application number: PCT/JP2024/027274
(87) International publication number: WO 2025/041547

(57) **Abstract**

The present invention provides a method for producing and an apparatus for producing a divided core that can improve shape accuracy as a divided core as a single unit and a motor core as a whole. That is, the present invention provides a method for producing a divided core, the method including Step (A) of arranging a plurality of divided core laminates in which a plurality of core plate materials constituting a divided core are temporarily joined together with a thermosetting adhesive and laminated on each other along an outer circumferential surface of an inner mold 1 to make a ring-shaped divided core assembly, Step (B) of disposing an outer mold 2 so as to surround an entire circumference of the divided core assembly, Step (C) of, while pressurizing and restraining the entire circumference of the divided core assembly by the outer mold 2, heating and holding the divided core assembly to and at a first temperature at which the thermosetting adhesive softens by a heater 3 inside the inner mold 1 and a heater 4 inside the outer mold 2, and Step (D) of, after an end of Step (C), heating the divided core assembly to a second temperature higher than the first temperature to cure the thermosetting adhesive. The present invention also provides an apparatus A for producing the divided core.

## Description

### Technical Field

The present invention relates to a method and an apparatus for producing a divided core constituting a ring-shaped motor core.

### Background Art

Most small motors installed in household appliances, automobiles, and the like include a divided core. As a method for producing such a divided core, Patent Literature 1 discloses "a method of production that heats a laminated block in which a plurality of plate-shaped elements the surface of which is coated with an adhesive are laminated on each other while arranging the laminated block, and fixes the plate-shaped elements of the laminated block to each other to obtain a laminate." Patent Literature 2 discloses "a method for producing a laminated motor core in which a plurality of divided iron core pieces constituting a ring-shaped iron core piece by being coupled to each other in the circumferential direction are adhesively laminated on each other."

### Citation List

### Patent Literature

Patent Literature 1: Japanese Patent No. 7278112
Patent Literature 2: Japanese Patent No. 6868719

### Summary

### Technical Problem

In the method of production of Patent Literature 1, the "laminate" corresponding to the divided core is produced one by one, and thus when a plurality of laminates are made into a ring-shaped motor core, it is difficult to obtain sufficient shape accuracy as the motor core as a whole. On the other hand, the method of production of Patent Literature 2 attempts to produce a plurality of divided cores by arranging them in a ring shape, but shape stability during the production of the divided cores is not sufficient, and it is difficult to obtain sufficient shape accuracy especially as the divided core as a single unit.

An object of the present invention is to provide a method for producing and an apparatus for producing a divided core that can improve shape accuracy as a divided core as a single unit and a motor core as a whole.

### Solution to Problem

One aspect of the present invention provides the following method for producing a divided core.

A method for producing a divided core, the method producing a divided core constituting a ring-shaped motor core, the method including:
Step (A) of arranging a plurality of divided core laminates in which a plurality of core plate materials constituting a divided core are temporarily joined together with a thermosetting adhesive and laminated on each other along an outer circumferential surface of an inner mold to make a ring-shaped divided core assembly;
Step (B) of disposing an outer mold so as to surround an entire circumference of the divided core assembly;
Step (C) of, while pressurizing and restraining the entire circumference of the divided core assembly by the outer mold, heating and holding the divided core assembly to and at a first temperature at which the thermosetting adhesive softens by a heater inside the inner mold and a heater inside the outer mold; and
Step (D) of, after an end of Step (C), heating the divided core assembly to a second temperature higher than the first temperature to cure the thermosetting adhesive.

Another aspect of the present invention provides the following apparatus for producing a divided core.

An apparatus for producing a divided core, the apparatus producing a divided core constituting a ring-shaped motor core, the apparatus including:
an inner mold;
an outer mold;
a heater installed in the inner mold and a heater installed in the outer mold; and
a pressurizing mechanism that pressurizes the outer mold toward the inner mold, in which
a plurality of divided core laminates are arranged in which a plurality of core plate materials constituting a divided core are temporarily joined together with a thermosetting adhesive and laminated on each other along an outer circumferential surface of the inner mold, and the inner mold is capable of holding the divided core laminates as a ring-shaped divided core assembly, and
the outer mold is disposed so as to surround an entire circumference of the divided core assembly and is capable of pressurizing and restraining the entire circumference of the divided core assembly.

### Advantageous Effects of Invention

The present invention can improve shape accuracy as a divided core as a single unit and a motor core as a whole.

### Brief Description of Drawings

FIG. 1 is a perspective view of the entire configuration of an apparatus for producing a divided core as one embodiment of the present invention.
FIG. 2 is a perspective view of a state in which a plurality of divided core laminates are arranged along an outer circumferential surface of an inner mold and are held as a ring-shaped divided core assembly in the apparatus for producing a divided core of FIG. 1.
FIG. 3 is an enlarged perspective view of the main part of FIG. 2.
FIG. 4 is a perspective view of an example of a divided core laminate to be applied to the apparatus for producing a divided core of FIG. 1.
FIG. 5 is an exploded perspective view of the main part of the inner mold, vertical direction restraining means, and circumferential direction restraining means that constitute the apparatus for producing a divided core of FIG. 1.
FIG. 6 is a perspective view of the main part illustrating a state in which one divided core laminate is arranged along the outer circumferential surface of the inner mold in the apparatus for producing a divided core of FIG. 1.
FIG. 7 is a perspective view of the main part illustrating a state in which an outer mold has moved toward the inner mold by a pressurizing mechanism from the state in FIG. 2 and FIG. 3.
FIG. 8A is a perspective view of the main part illustrating a state in which a heater installed inside the inner mold is at an initial position.
FIG. 8B is a perspective view of the main part illustrating a state in which the heater is installed inside the inner mold.
FIG. 9 is a perspective view of the main part illustrating a state in which a nut constituting the vertical direction restraining means is tightened using a nut runner in the apparatus for producing a divided core of FIG. 1.

### Description of Embodiments

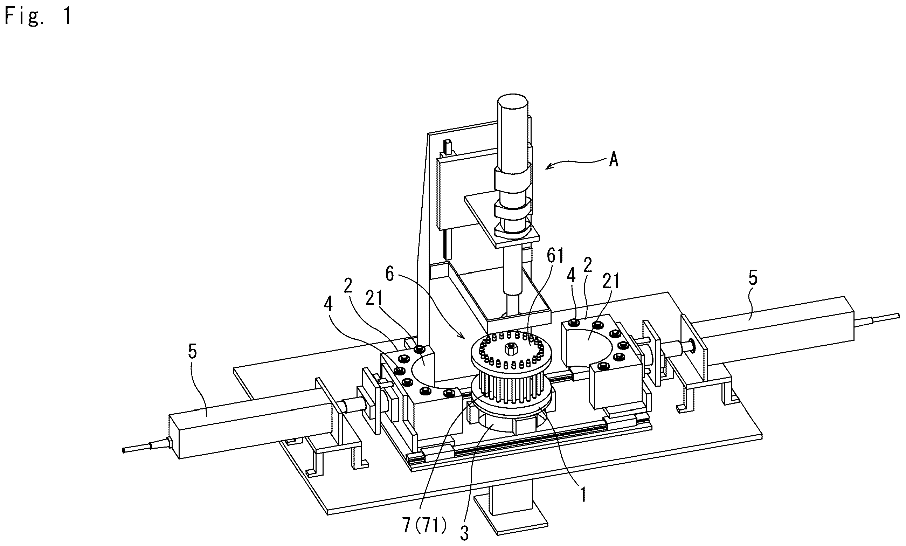

FIG. 1 illustrates the entire configuration of an apparatus for producing a divided core as one embodiment of the present invention with a perspective view. Note that FIG. 1 omits an outer frame and the like, and illustrates the apparatus in a simplified manner as appropriate.

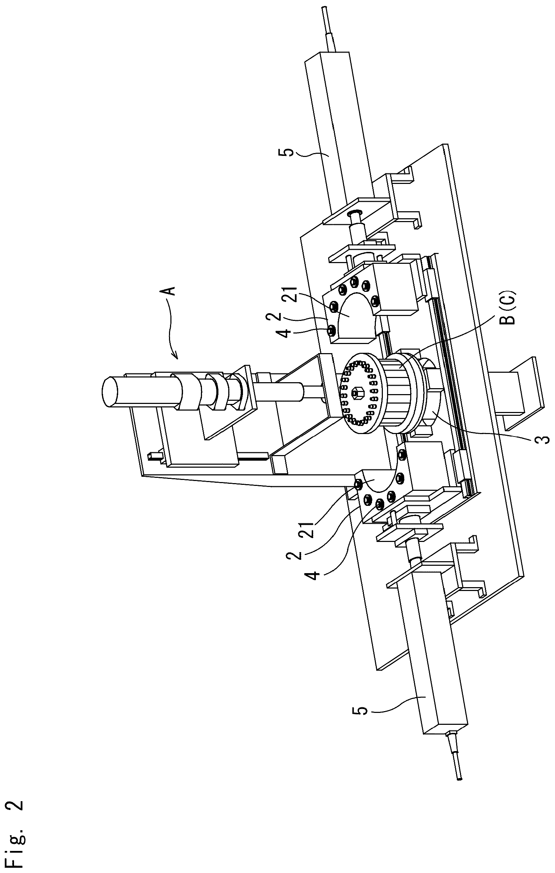

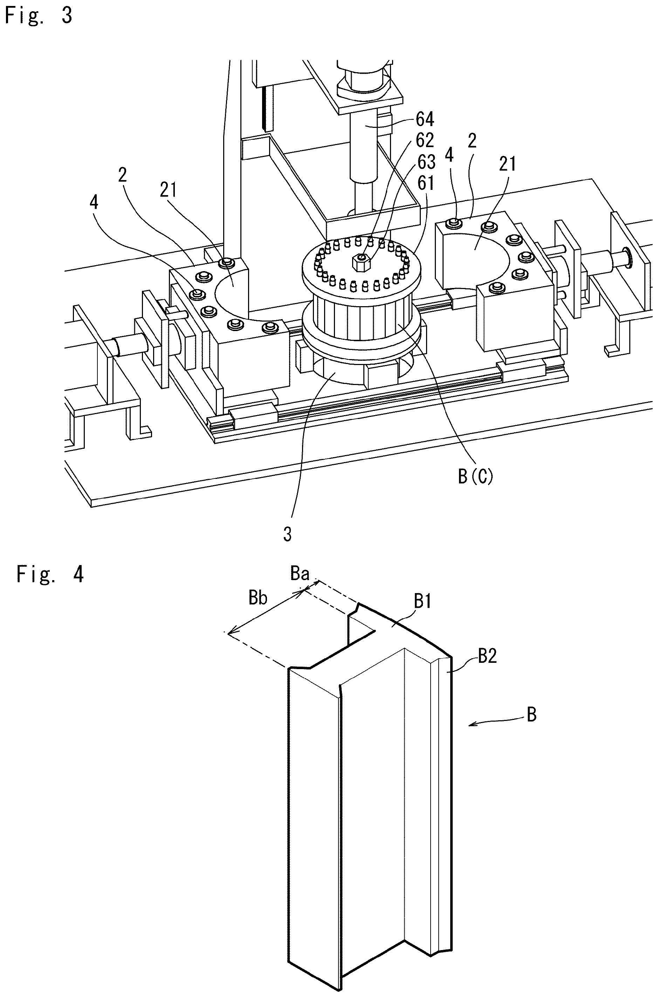

This apparatus A for producing a divided core illustrated in FIG. 1 includes an inner mold 1, an outer mold 2, heaters 3 and 4 installed in the inner mold 1 and the outer mold 2, respectively, and a pressurizing mechanism 5 that pressurizes the outer mold 2 toward the inner mold 1. As described in detail below, a plurality of divided core laminates B are arranged along the outer circumferential surface of the inner mold 1, and the inner mold 1 is capable of holding the divided core laminates B as a ring-shaped divided core assembly C (refer to FIG. 2 and FIG. 3), and the outer mold 2 is disposed so as to surround the entire circumference of the divided core assembly C and is capable of pressurizing and restraining the entire circumference of the divided core assembly C.

The apparatus A for producing a divided core illustrated in FIG. 1 further includes vertical direction restraining means 6 that restrains the divided core assembly C in the vertical direction and circumferential direction restraining means 7 that restrains the divided core assembly C in the circumferential direction. Details of the vertical direction restraining means 6 and the circumferential direction restraining means 7 will also be described below.

FIG. 4 illustrates an example of the divided core laminate B to be applied to the apparatus A for producing a divided core of FIG. 1 with a perspective view. The divided core laminate B is made by temporarily joining together a plurality of core plate materials B1 constituting a divided core with a thermosetting adhesive B2 and laminating them on each other. As the core plate material B1, an electromagnetic steel sheet is typically used. As the thermosetting adhesive B2, one having the property of being capable of temporarily joining together the core plate materials B1 when the divided core laminate B is produced, and then softening at a first temperature and curing, that is, irreversibly curing at a second temperature higher than the first temperature when the divided core is produced is used. In the present embodiment, an epoxy-based thermosetting adhesive is used. The epoxy-based thermosetting adhesive used in the present embodiment has the property of softening at about 100°C and irreversibly curing at about 200°C. Note that the method for temporarily joining together the core plate materials B1 with the thermosetting adhesive is not limited to a particular method, but they can be temporarily joined together using an interlayer adhesive sheet containing a thermosetting adhesive, for example. Here, "temporarily joined" refers to a state of not being heated to the second temperature described above and not irreversibly curing.

The divided core produced in the present embodiment has a shape in which a stator is divided into 24 parts in the circumferential direction, and the divided core laminate B illustrated in FIG. 4 has the same shape. That is, in the present embodiment, the divided core laminate B has a yoke portion Ba forming a ring shape when assembled as the stator, and a teeth portion Bb around which a coil is wound.

Next, a method for producing a divided core using the apparatus A for producing a divided core will be described.

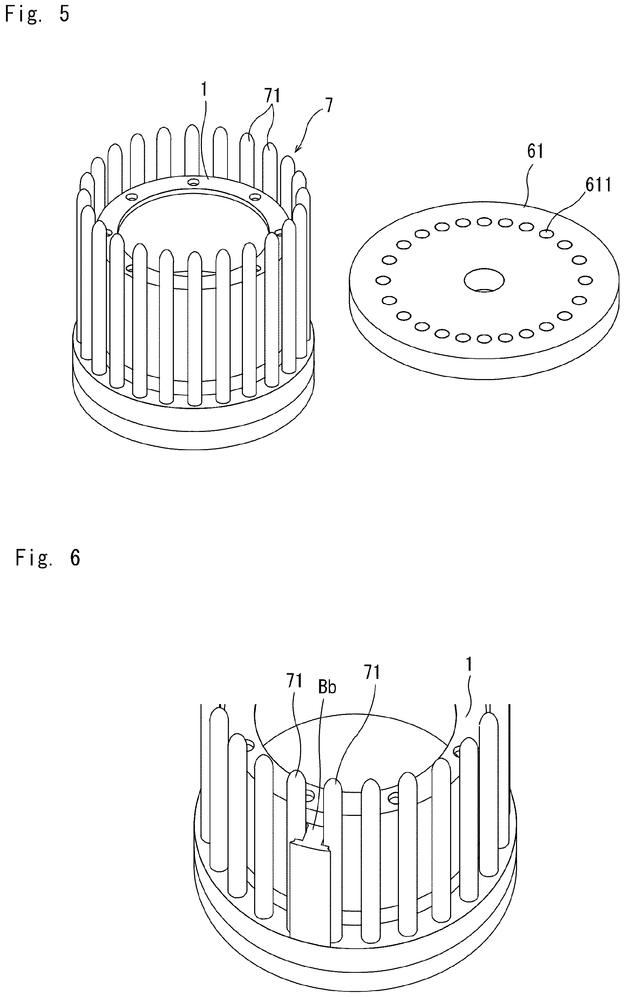

First, a plurality of (24 in the present embodiment) the divided core laminates B are arranged along an outer circumferential surface of the inner mold 1 to form a ring-shaped divided core assembly C (Step (A)). Here, in the present embodiment, as illustrated in FIG. 5, a plurality of (24 in the present embodiment) guide posts 71 are arranged outside the inner mold 1 as the circumferential direction restraint means 7. When the divided core laminate B is arranged along the outer circumferential surface of the inner mold 1, the teeth portion Bb of the divided core laminate B is arranged so as to fit between adjacent guide posts 71 and 71, as illustrated in FIG. 6. This forms the ring-shaped divided core assembly C along the outer circumferential surface of the inner mold 1, as illustrated in FIG. 2 and FIG. 3.

Note that in the present embodiment, a lid 61 is used in order to restrain the divided core assembly C in the vertical direction. This lid 61 has guide holes 611 through which the guide posts 71 can be inserted, as illustrated in FIG. 5. After forming the divided core assembly C in the manner described above, the guide posts 71 are inserted through the guide holes 711 to mount the lid 61 such that the lower surface of the lid 61 is in contact with the upper surface of the divided core assembly C. Furthermore, as represented in FIG. 3, a nut 63 is mounted on a bolt 62 fixed at the center of the inner mold 1. As described in detail below, the divided core assembly C can be restrained in the vertical direction by tightening the nut 63.

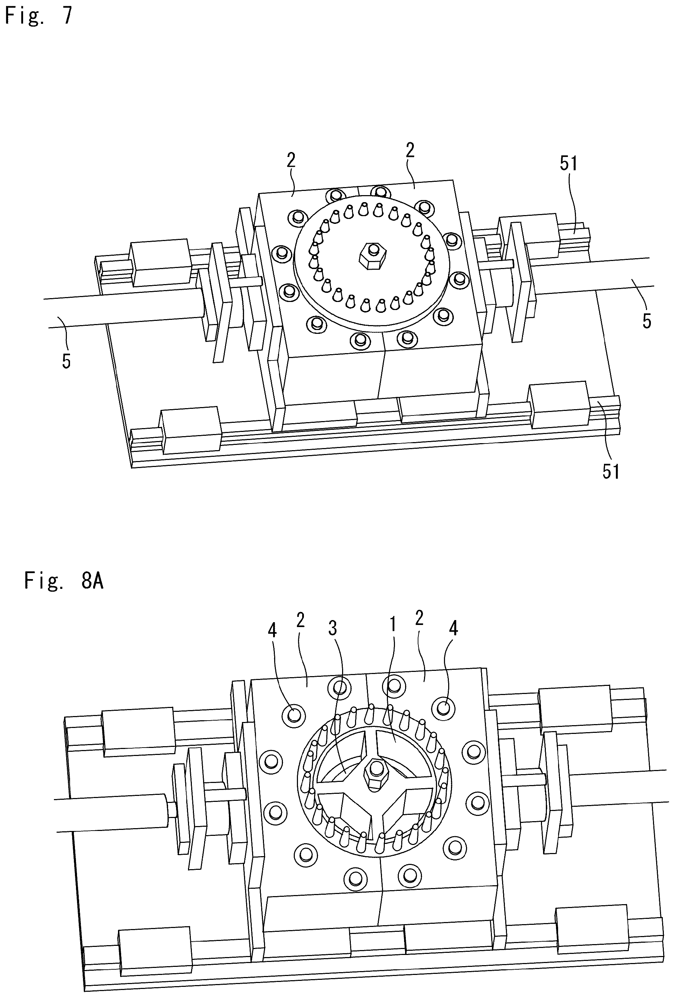

Next, the outer mold 2 is disposed so as to surround the entire circumference of the divided core assembly C (Step (B)). In the present embodiment, the outer mold 2 is divided into two parts, and each of their respective inner circumferential surfaces 21 and 21 has a semicircular shape that matches half of an outer circumferential surface of the divided core assembly C. A pressurizing mechanism 5 is connected to each of the two divided parts of the outer mold 2, and the pressurizing mechanism 5 moves the outer mold 2 toward the inner mold 1 along a pair of rails 51, as illustrated in FIG. 7. As a result, the outer mold 2 can be arranged so as to surround the entire circumference of the divided core assembly C, and the entire circumference of the divided core assembly C can be pressurized and restrained by the outer mold 2.

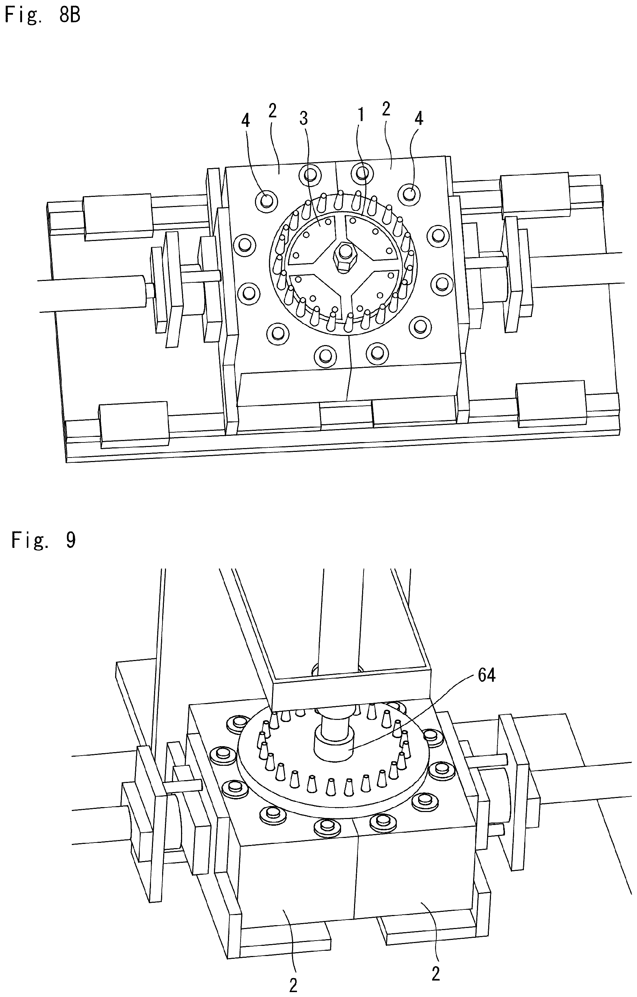

Subsequently, while pressurizing and restraining the entire circumference of the divided core assembly C by the outer mold 2, the divided core assembly C is heated to and held at the first temperature at which the thermosetting adhesive B2 softens by the heater 3 inside the inner mold 1 and the heater 4 inside the outer mold 2 (Step (C)). In the present embodiment, the heater 3 is provided in such a manner that it can be raised and lowered, and its initial position is a position directly below the inner mold 1, as represented in FIG. 3 and FIG. 8A. When Step (C) is performed, the heater 3 is raised and positioned inside the inner mold 1, as represented in FIG. 8B. The heater 4, on the other hand, is built into the outer mold 2 from the beginning. Both the heater 3 and the heater 4 include a temperature adjusting function, and in Step (C), the temperature is raised to the first temperature and maintained at that temperature. As described above, the thermosetting adhesive B2 used in the present embodiment has the property of softening at about 100°C and irreversibly curing at about 200°C. Thus, in the present embodiment, in Step (C), the first temperature is set at 100°C and held for 15 minutes. The pressurizing force by the outer mold 2 to the divided core assembly C can be adjusted by the pressurizing force by the pressurizing mechanism 5, and can be about 350 N, for example.

In the present embodiment, in Step (C), as described above, the outer mold 2 pressurizes and restrains the entire circumference of the divided core assembly C, and the vertical direction restraining means 6 and the circumferential direction restraining means 7 restrain the divided core assembly C also in the vertical direction and the circumferential direction. In the present embodiment, the vertical direction of the divided core assembly C is restrained by tightening the nut 63 (FIG. 3), which constitutes the vertical direction restraining means 6, using a nut runner 64, as illustrated in FIG. 9. The nut runner 64 can be raised and lowered, and can tighten the nut 63 with a torque of about 40 Nm, for example. In the present embodiment, the circumferential direction of the divided core assembly C, on the other hand, is restrained by the teeth portion Bb of the divided core laminate B being fit between the adjacent guide posts 71 and 71, as illustrated in FIG. 5.

After the end of Step (C), the divided core assembly C is heated to the second temperature higher than the first temperature described above to cure, that is, irreversibly cure the thermosetting adhesive B2 (Step (D)). In the present embodiment, the second temperature is set at 200°C, which is higher than the first temperature (100°C) described above.

Here, Step (D) can be performed continuously with Step (C) described above. In this case, in Step (D), after the end of Step (C), while pressurizing and restraining the entire circumference of the divided core assembly C by the outer mold 2 as it is, the divided core assembly C is heated (raised in temperature) from the first temperature (100°C in the present embodiment) to the second temperature (200°C in the present embodiment) and held at the second temperature by the heater 3 inside the inner mold 1 and the heater 4 inside the outer mold 2. The holding time can be about 15 minutes, the same as in Step (C). The pressurizing force by the outer mold 2 to the divided core assembly C can also be about 350 N, the same as in Step (C), or it can be higher or lower than the pressurizing force in Step (C) depending on the situation.

On the other hand, Step (D) can also be performed discontinuously with Step (C) described above. In this case, an inner mold and an outer mold having the same shapes as the inner mold 1 and the outer mold 2 described above (hereinafter referred to as "second inner mold" and "second outer mold," respectively) are separately prepared, and while pressurizing and restraining the entire circumference of the divided core assembly by the second outer mold, the divided core assembly C is heated to and held at the second temperature by a heater inside the second inner mold and a heater inside the second outer mold. When Step (D) is thus performed using the second inner mold and the second outer mold, the heater inside the second inner mold and the heater inside the second outer mold can be heated to the second temperature in advance, thus improving productivity compared to the case when Step (D) is performed continuously with Step (C). That is, this is because the time required to raise the temperature of the heater 3 inside the inner mold 1 and the heater 4 inside the outer mold 2 from the first temperature to the second temperature can be omitted, and the time required to lower the temperature of the heater 3 inside the inner mold 1 and the heater 4 inside the outer mold 2 from the second temperature to the first temperature in order to perform Step (C) for the next production after the end of Step (D) can be omitted.

As described above, the method for producing a divided core of the present invention includes Step (A) to Step (D), and can thereby improve shape accuracy as the divided core as a single unit and the motor core as a whole. In particular, in Step (C), while pressurizing and restraining the entire circumference of the divided core assembly C by the outer mold 2, the divided core assembly C is heated to and held at the first temperature at which the thermosetting adhesive B2 softens by the heater 3 inside the inner mold 1 and the heater 4 inside the outer mold 2, and thereby the shape of the divided core laminate B as a single unit and the divided core assembly C, which is an assembly of the divided core laminate B, can be corrected to a shape following a final product shape as the motor core. This can improve shape accuracy as the divided core as a single unit and the motor core as a whole. Furthermore, in the present embodiment, the divided core assembly C is restrained in the vertical direction and the circumferential direction in Step (C), which can further improve shape accuracy. Step (D) can be performed continuously with Step (C) from the viewpoint of improving shape accuracy, or can be performed discontinuously with Step (C) from the viewpoint of improving productivity. In either case, it is preferable to restrain the divided core assembly C also in the vertical direction and the circumferential direction also in Step (D).

Although the embodiment of the present invention has been described above, the present invention is not limited to the present embodiment. For example, the outer mold 2 is divided into two parts in the present embodiment, but it may be divided into three parts or four parts. In the present embodiment, the heater 3 is provided in such a manner that it can be raised and lowered, but it may be built into the inner mold 1 from the beginning. Furthermore, the shape and kind of the divided core produced in the present invention are not limited to the shape and kind illustrated in FIG. 4, and a divided core constituting a rotor can also be produced, for example.

### Reference Signs List

- A: Apparatus for producing divided core
- B: Divided core laminate
- Ba: Yoke portion
- Bb: Teeth portion
- B1: Core plate material
- B2: Thermosetting adhesive
- C: Divided core assembly
- 1: Inner mold
- 2: Outer mold
- 21: Inner circumferential surface
- 3: Heater
- 4: Heater
- 5: Pressurizing mechanism
- 51: Rail
- 6: Vertical direction restraining means
- 61: Lid
- 62: Bolt
- 63: Nut
- 64: Nut runner
- 7: Circumferential direction restraining means
- 71: Guide post

## Claims

1. A method for producing a divided core, the method producing a divided core constituting a ring-shaped motor core, the method comprising:
Step (A) of arranging a plurality of divided core laminates in which a plurality of core plate materials constituting a divided core are temporarily joined together with a thermosetting adhesive and laminated on each other along an outer circumferential surface of an inner mold to make a ring-shaped divided core assembly;
Step (B) of disposing an outer mold so as to surround an entire circumference of the divided core assembly;
Step (C) of, while pressurizing and restraining the entire circumference of the divided core assembly by the outer mold, heating and holding the divided core assembly to and at a first temperature at which the thermosetting adhesive softens by a heater inside the inner mold and a heater inside the outer mold; and
Step (D) of, after an end of Step (C), heating the divided core assembly to a second temperature higher than the first temperature to cure the thermosetting adhesive.

2. The method for producing a divided core according to claim 1, wherein in Step (C), the divided core assembly is restrained in a vertical direction and a circumferential direction.

3. The method for producing a divided core according to claim 1 or 2, wherein
Step (D) is performed continuously with Step (C), and
while pressurizing and restraining the entire circumference of the divided core assembly by the outer mold, the divided core assembly is heated to and held at the second temperature by the heater inside the inner mold and the heater inside the outer mold.

4. The method for producing a divided core according to claim 1 or 2, wherein
Step (D) is performed discontinuously with Step (C), and
an inner mold and an outer mold having same shapes as the inner mold and the outer mold (hereinafter referred to as "second inner mold" and "second outer mold," respectively) are separately prepared, and while pressurizing and restraining the entire circumference of the divided core assembly by the second outer mold, the divided core assembly is heated to and held at the second temperature by a heater inside the second inner mold and a heater inside the second outer mold.

5. An apparatus for producing a divided core, the apparatus producing a divided core constituting a ring-shaped motor core, the apparatus comprising:
an inner mold;
an outer mold;
a heater installed in the inner mold and a heater installed in the outer mold; and
a pressurizing mechanism that pressurizes the outer mold toward the inner mold, in which
a plurality of divided core laminates are arranged in which a plurality of core plate materials constituting a divided core are temporarily joined together with a thermosetting adhesive and laminated on each other along an outer circumferential surface of the inner mold, and the inner mold is capable of holding the divided core laminates as a ring-shaped divided core assembly, and
the outer mold is disposed so as to surround an entire circumference of the divided core assembly and is capable of pressurizing and restraining the entire circumference of the divided core assembly.

6. The apparatus for producing a divided core according to claim 5, further comprising:
vertical direction restraining means that restrains the divided core assembly in a vertical direction; and
circumferential direction restraining means that restrains the divided core assembly in a circumferential direction.
